# EUROPÄISCHE PATENTSCHRIFT

(11) **EP 1 923 191 B1**
(45) Veröffentlichungstag und Bekanntmachung des Hinweises auf die Patenterteilung: **26.08.2009**
(21) Anmeldenummer: 07019683.7
(22) Anmeldetag: 09.10.2007
(51) Int. Cl.: B29C 37/00, B29C 67/24, B29C 45/16

(54) **Verfahren zur Herstellung eines beschichteten Kunststoff-Formteils**
Method for producing a coated plastic moulded part
Procédé destiné à la fabrication d'un élément de formage en plastique revêtu

(30) Priorität: 13.11.2006 DE 102006053296
(43) Veröffentlichungstag der Anmeldung: 21.05.2008
(73) Patentinhaber: Bayerische Motoren Werke Aktiengesellschaft, 80809 München (DE)
(72) Erfinder: Schwager, Hans, 85253 Erdweg (DE); Kusebauch, Rolf-H., 94345 Obermotzing (DE); Henn, Joachim, 51709 Marienheide (DE)

(56) Entgegenhaltungen:
- EP-A- 0 474 248
- WO-A-94/13410
- WO-A-96/23041
- DE-A1- 3 932 307
- US-A1- 2001 041 233

## Beschreibung

Die Erfindung betrifft ein Verfahren zur Herstellung eines sichtseitig beschichteten Kunststoff-Formteils in einem Formwerkzeug, wobei ein die Sichtseite bildender Beschichtungswerkstoff in viskosem Zustand auf die Oberfläche des Formwerkzeugs und nachfolgend ein das Formteil bildender Basiswerkstoff aufgebracht werden.

Ein derartiges Verfahren, bei dem die Lackierung eines Kuntstoff-Formteils bereits im Formwerkzeug durchgeführt wird, wird auch als In-Mould-Coating-Verfahren (IMC) bezeichnet. Dabei wird beispielsweise ein Lacksystem, vorzugsweise ein hochreaktiver 2-Komponenten-Lack in einem Spritz- oder Sprühverfahren in das Formwerkzeug gebracht. Danach wird in die offene oder geschlossene Form ein Trägermaterial auf Polyurethan-Basis eingebracht. Nach Ablauf der Reaktionszeit wird das Formteil dem Werkzeug entnommen. Das Ergebnis ist ein Bauteil mit Finish-Oberfläche, die je nach Formbeschaffenheit hochglänzend bis matt und glatt bis strukturiert sein kann.

Ein weiteres Verfahren ist aus der WO 96 230 U1 bekannt. Ein Verfahren zur Verbesserung der Harzverteilung in einem Rotationswerkzeug ist aus der US 200 104 12 33 bekannt.

Aufgrund der chemisch ähnlichen Beschaffenheit zwischen Coating-Schicht und Basismaterial, sowie des zeitnahen Zusammenbringens beider Bestandteile des Formteils kommt es zu einem starken chemischen und mechanischen Verbund an der Grenzfläche (Stoffschluss). Auch nach Aushärtung der IMC-Schicht ist eine Reparatur und Überlackierung möglich. Das In-Mould-Coating ist hochreaktiv, nach ca. 3 Minuten staubtrocken, lösemittelfrei, variabel in Farbton und Endhärte, chromat- und bleifrei, UV-Stabil und chemikalienbeständig. Die In-Mould-Technik impliziert folgende Vorteile: Kostenreduzierung durch Verkürzung oder Wegfall einzelner Prozess-Schritte, gute Haftung zwischen Formteiloberfläche und Lack, Qualität der Lackoberfläche durch Formbeschaffenheit auf Kundenwunsch abstimmbar, höhere Designfreiheit bei der Formgebung des Bauteils sowie Möglichkeit der Systemanpassung an verschiedenste Basismaterialien und Verfahrensweisen. Außerdem ist das Verfahren ideal für die Verwendung von Füllstoffen wie gemahlenen Glasfasern und Sisal geeignet und es besteht erhebliches Potenzial in der Realisierung sehr kurzer Reaktions- und Prozesszeiten.

Die Aufbringung des Beschichtungswerkstoffs auf die Formwerkzeugoberfläche in einem Spritz- oder Sprühverfahren führt bei einfachen Bauteilgeometrien in der Regel zu einer guten Oberflächenschichtqualität. Bei komplizierteren Bauteilgeometrien, insbesondere bei hinterschnittigen Geometrien, kann jedoch häufig der Beschichtungswerkstoff nur ungleichmäßig aufgetragen werden mit der Folge, dass das fertige Kunststoff-Formteil Oberflächenstörungen, wie Beschichtungslücken oder Bereiche mit übermäßig dicker Beschichtung (Lacknasen) aufweist. Soweit, wenn überhaupt möglich, eine bessere Oberflächenqualität erzielt werden soll, verlängern sich die Prozesszeiten signifikant. Bisher waren daher immer Kompromisse bei der konstruktiven Gestaltung derartiger Kunststoff-Formteile einzugehen und verfahrens- und prozessbedingte Probleme mussten akzeptiert werden.

Ein Verfahren zur Beschichtung von Bauteilen mitteln Übertragungskörpern ist aus der EP 0 982 999 bekannt.

Der Erfindung liegt daher die Aufgabe zugrunde, ein eingangs genanntes Verfahren bereit zu stellen, mit dem die Vorteile der In-Mould-Technik nahezu unabhängig von der Geometrie des herzustellenden Kunststoff-Formteils insbesondere auch bei hinterschnittigen Geometrien genutzt werden können. Dabei soll eine hohe Bauteilqualität mit zumindest annähernd konstanter Oberflächenschichtdicke in allen Bauteilbereichen erzielt werden und zugleich ein einfaches, kostengünstiges und prozesssicheres Verfahren bereitgestellt werden.

Die Lösung der Erfindung erfolgt mit einem Verfahren mit den Merkmalen des Anspruchs 1.

Besonders vorteilhafte Ausgestaltungen und Weiterbildungen der Erfindung sind Gegenstand der Unteransprüche.

So wird in sehr vorteilhafter Weise ein Auftrag auf auch entlegene oder in einem Hinterschnittbereich liegende Bereiche des Formwerkzeugs ermöglicht, welche mittels einer Einrichtung zur Ausbringung des Beschichtungswerkstoffs direkt nicht oder nur schwer zugänglich sind, indem die Übertragungskörper den Beschichtungswerkstoff aufnehmen und in Berührkontakt auf die Oberfläche des Formwerkzeugs übertragen.

Die Aufbringung des Beschichtungswerkstoffs auf die Oberfläche des Formwerkzeugs erfolgt mittels einer Vielzahl kugelförmiger Übertragungskörper die gut zur Aufnahme von Beschichtungswerkstoff und zum abrollenden Übertragen desselben auf die Oberfläche des Formwerkzeugs geeignet sind.

Als besonders vorteilhaft hat es sich erwiesen, zur Aufbringung des Beschichtungswerkstoffs auf die Oberfläche des Formwerkzeugs zuerst den Beschichtungswerkstoff auf die Übertragungskörper aufzubringen und nachfolgend den Beschichtungswerkstoff auf die Oberfläche des Formwerkzeugs zu übertragen.

Vorzugsweise erfolgt ein Übertrag des Beschichtungswerkstoffs auf vorbestimmte Oberflächenbereiche des Formwerkzeugs viskositätsabhängig im Druckverfahren abrollend.

Nachfolgend wird ein besonders zu bevorzugendes Ausführungsbeispiel der Erfindung unter Bezugnahme auf Figuren näher erläutert, dabei zeigen schematisch und beispielhaft
- Figur 1: ein Formwerkzeug zur Herstellung von kompliziert geformten Kunststoff-Formteilen mit Hinterschnittbereichen in In-Mould-Technik,
- Figur 2: die Aufbringung eines Beschichtungswerkstoffs auf die Formwerkzeugoberfläche gemäß dem Stand der Technik in einem Spritz- oder Sprühverfahren,
- Figur 3a: die erfindungsgemäße Aufbringung eines Beschichtungswerkstoffs auf die Formwerkzeugoberfläche im Rotationsdruckverfahren und
- Figur 3b: eine erfindungsgemäß aufgebrachte gleichmäßige Oberflächenschicht.

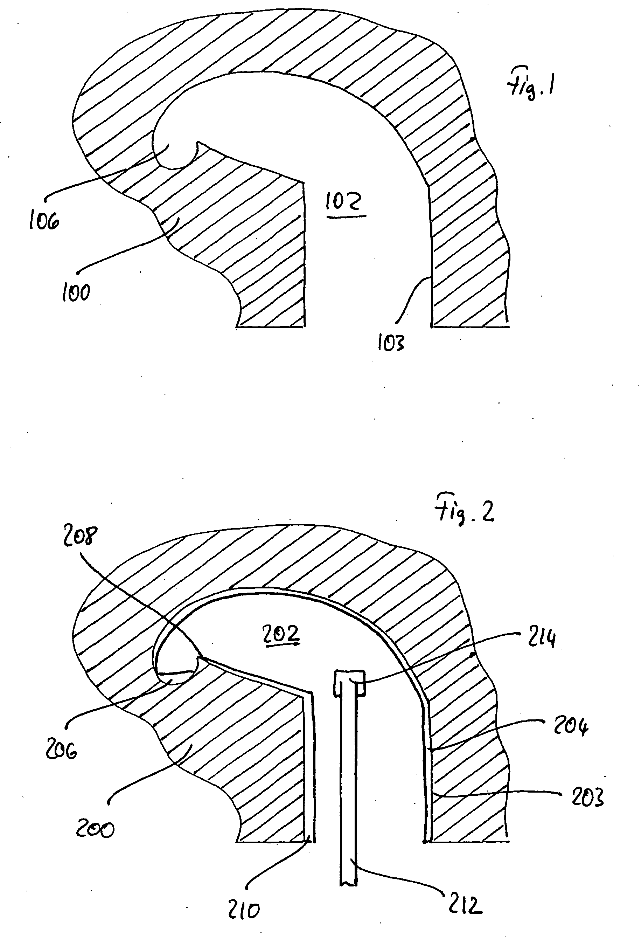

Figur 1 zeigt ein Formwerkzeug 100 zur Herstellung von kompliziert geformten Kunststoff-Formteilen mit Hinterschnittbereichen 106 in In-Mould-Technik. Bei dem Formwerkzeug 100 handelt es sich um ein einteiliges offenes oder um ein mehrteiliges schließbares Formwerkzeug, dessen Kavität mit 102 bezeichnet ist. Die Formwerkzeugoberfläche ist glatt oder strukturiert, beispielsweise mit einer Narbenstruktur zur Erzeugung einer lederähnlichen Oberfläche oder mit einer Struktur zur Nachbildung anderer strukturierter Oberflächen. Mit dem Formwerkzeug 100 sind Kunststoff-Formteile vorzugsweise für ein Kraftfahrzeug, insbesondere Außenhaut-oder Innerraumteile herstellbar. Hierzu wird beispielsweise ein hochreaktiver 2-Komponenten-Lack als Beschichtungswerkstoff in das Formwerkzeug 100 und danach in die offene oder geschlossene Kavität 102 ein Trägermaterial auf Polyurethan-Basis eingebracht. Beschichtungswerkstoff und Trägermaterial sind chemisch derart kompatibel und werden so zeitnah zusammengebracht, dass beide Bestandteile des Formteils an der Grenzfläche einen starken chemischen und mechanischen Verbund (Stoffschluss) bilden. Nach Ablauf der Reaktionszeit wird das Formteil dem Werkzeug 100 entnommen.

Die Aufbringung eines Beschichtungswerkstoffs 204 auf die Formwerkzeugoberfläche 203 gemäß dem Stand der Technik in einem Spritz- oder Sprühverfahren ist in Figur 2 dargestellt. Eine Einrichtung 212 mit einem Spritz- oder Sprühkopf 214 zur Ausbringung des Beschichtungswerkstoffs 204 wird in die Kavität 202 eines Formwerkzeuges 200 eingeführt und der Beschichtungswerkstoff 204 wird ausgespritzt oder - gesprüht. Dabei werden die Bereiche der Formwerkzeugoberfläche 203 entsprechend ihrer jeweiligen Form und Lage in Bezug auf Spritz- oder Sprühkopf 214 mit Beschichtungswerkstoff 204 benetzt. Beispielsweise sammelt sich in einem topfförmigen Hinterschnittbereich 206 eine größere Menge Beschichtungswerkstoff 204, während eine Kante 208 nicht oder nur gering mit Beschichtungswerkstoff 204 benetzt wird. Insgesamt ist die so aufgebrachte Oberflächenschicht 210 ungleichmäßig und unterschiedlich stark.

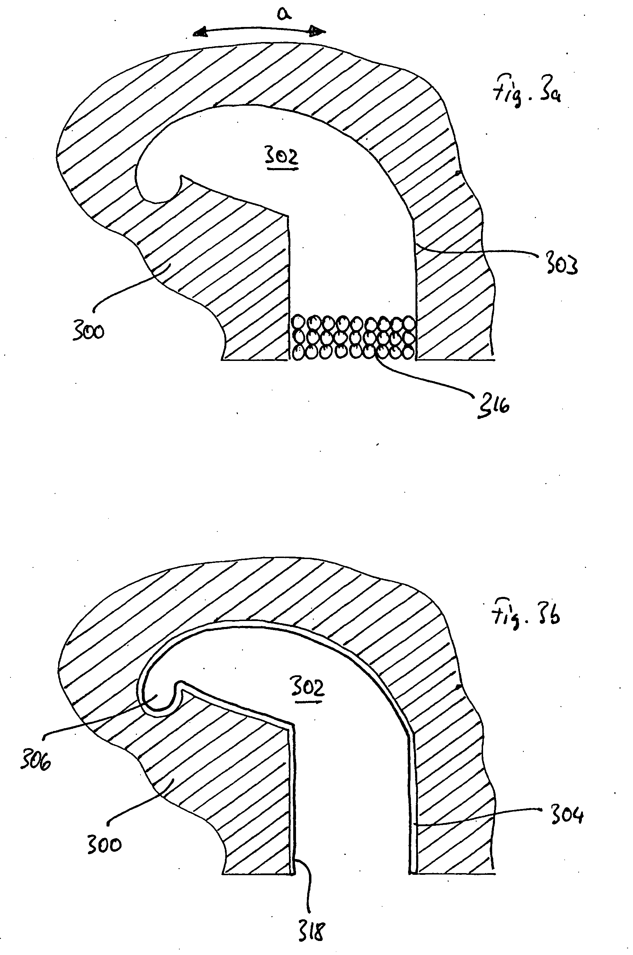

Figur 3a zeigt die erfindungsgemäße Aufbringung eines Beschichtungswerkstoffs 304 auf die Formwerkzeugoberfläche 303 im Rotationsdruckverfahren, eine erfindungsgemäß aufgebrachte gleichmäßige Oberflächenschicht 318 ist in Figur 3b dargestellt. Den Beschichtungswerkstoffeintrag und die gleichmäßige Verteilung auf die entsprechend vorbereitete Formwerkzeugoberfläche 303 übernehmen bei diesem so genannten IMC-Rotationsdruckverfahren kleine. Übertragungskörper 316, vorliegend Kugeln, welche den viskosen Beschichtungswerkstoff verteilen und dabei auf die gewünschte Oberfläche viskositätsabhängig, im Druckverfahren abrollend, übertragen.

Die Übertragungskörper 316 werden entweder außerhalb des Formwerkzeuges 300 mit dem Beschichtungswerkstoff benetzt und dann in die Kavität 302 des Formwerkzeugs 300 eingebracht oder dieser Vorgang erfolgt bereits innerhalb der Kavität 302. Als besonders vorteilhaft hat es sich erwiesen, einen Beschichtungsstoff 304 gleichzeitig und gemeinsam mit mindestens einem Übertragungskörper 316 in die Kavität 302 einzubringen. Nachfolgend wird das Formwerkzeug 300 entsprechend der Pfeilrichtung a verschwenkt oder gedreht wird, so dass die Übertragungskörper 316 in alle gewünschten Bereiche, auch in Hinterschnittbereiche wie 306, des Formwerkzeug 300 vordringen und die Formwerkzeugoberfläche 303 mit Beschichtungswerkstoff benetzen. Sobald die Formwerkzeugoberfläche 303 wie erforderlich mit Beschichtungswerkstoff benetzt ist, werden die Übertragungskörper 316 aus der Kavität 302 des Formwerkzeugs 300 entfernt und das Trägermaterial kann eingebracht werden.

Zusammen mit der Viskosität des Beschichtungswerkstoffs bei seiner Aufbringung, der Dicke der aufzubringenden Oberflächenschicht sowie Form und Oberflächenbeschaffenheit des Formwerkzeugs 100 sind Form, Masse, Oberflächenbeschaffenheit und Menge der Übertragungskörper 316 prozessbestimmend. Die Oberfläche der Übertragungskörper 316 kann je nach Anwendungsfall glatt bis rau sein, die Übertragungskörper 316 können gegebenenfalls saugfähig sein und Kapillaren umfassen zur Speicherung und Abgabe einer erhöhten Menge Beschichtungswerkstoff. Die Verwendung kleiner Übertragungskörper 316 bietet den Vorteil, dass diese auch in enge Strukturen des Formwerkzeugs 300 eindringen und dort die Formwerkzeugoberfläche 303 benetzen können, allerdings hat sich gezeigt, dass es zur Entfernung der Übertragungskörper 316 nach erfolgter Benetzung der Formwerkzeugoberfläche 303 vorteilhaft ist, wenn diese eine vorbestimmte Masse nicht unterschreiten und nicht zu stark an der aufgebrachten Oberflächenschicht haften. Die Übertragungskörper 316 können auch selbstauflösend sein. Beispielsweise werden als Übertragungskörper 316 Glas-, Glashohl-, Keramik-, Metall- oder Sintermetallkugeln verwendet.

Nach Entfernung der Übertragungskörper 316 aus der Kavität 302 des Formwerkzeugs 300 nach erfolgter Oberflächenbenetzung werden die Übertragungskörper 316 vorzugsweise gereinigt, gegebenenfalls auch ungereinigt, wieder mit Beschichtungswerkstoff beaufschlagt und erneut verwendet.

Im Ergebnis wird eine gleichmäßig starke Oberflächenschicht 318 von hoher Qualität erhalten, zugleich kann eine Kostenreduktion durch eine qualifizierte Prozessfähigkeit, bedingt durch ein definiertes konstantes Dickenverhältnis und die daraus resultierende Zykluszeitverkürzung erhalten werden. Es sind Kunststoff-Formteile mit extremen Geometrien bei gleichzeitig annähernd gleichmäßigen Beschichtungsdicken darstellbar.

## Patentansprüche

1. Verfahren zur Herstellung eines sichtseitig beschichteten Kunststoff-Formteils in einem eine Kavität (102, 202, 302) umfassenden Formwerkzeug (100, 200, 300), wobei
- ein die Sichtseite bildender Beschichtungswerkstoff (204, 304) in viskosem Zustand auf die Oberfläche (103, 203, 303) der Kavität (102, 202, 302) des Formwerkzeugs (100, 200, 300) und nachfolgend ein das Formteil bildender Basiswerkstoff aufgebracht werden,
**dadurch gekennzeichnet, dass**
- der Beschichtungswerkstoff (204, 304) mittels Übertragungskörpern (316) auf die Oberfläche (103, 203, 303) der Kavität (102, 202, 302) des Formwerkzeugs (100, 200, 300) indirekt aufgebracht wird,
- eine Vielzahl kugelförmiger Übertragungskörper (316) verwendet wird und
- die Übertragungskörper (316), sobald die Formwerkzeugoberfläche (303) wie erforderlich mit Beschichtungswerkstoff (304) benetzt ist, aus der Kavität (302) des Formwerkzeugs (300) entfernt werden.

2. Verfahren nach Anspruch 1, **dadurch gekennzeichnet, dass** die Übertragungskörper (316)
- so klein sind, dass sie auch in enge Strukturen des Formwerkzeugs (300) eindringen und dort die Oberfläche (303) der Kavität (302) des Formwerkzeugs (300) benetzen können und
- zu ihrer Entfernung eine vorbestimmte Masse nicht unterschreiten und nicht zu stark an der aufgebrachten Oberfläche anhaften.

3. Verfahren nach einem der Ansprüche 1-2, **dadurch gekennzeichnet, dass** die Oberfläche der Übertragungskörper (316) glatt bis rau ist.

4. Verfahren nach einem der Ansprüche 1-3, **dadurch gekennzeichnet, dass** die Oberfläche der Übertragungskörper (316) saugfähig ist und Kapillaren umfasst zur Speicherung und Abgabe einer erhöhten Menge Beschichtungswerkstoff.

5. Verfahren nach einem der Ansprüche 1-4, **dadurch gekennzeichnet, dass** die Übertragungskörper (316) selbstauflösend sind.

6. Verfahren zur Aufbereitung von in einem Verfahren nach einem der vorhergehenden Ansprüche verwendeten Übertragungskörpern (316), **dadurch gekennzeichnet, dass** nach dem Entfernen der Übertragungskörper (316) aus der Kavität (302) des Formwerkzeugs (300) nach erfolgter Oberflächenbenetzung die Übertragungskörper (316) vorzugsweise gereinigt, gegebenenfalls auch ungereinigt, wieder mit Beschichtungswerkstoff beaufschlagt und erneut verwendet werden.

## Claims

1. A method for producing a plastics material moulded part, which is coated on the visible side, in a moulding tool (100, 200, 300) comprising a cavity (102, 202, 302), wherein
- a coating material (204, 304) forming the visible side is applied in a viscous state to the surface (103, 203, 303) of the cavity (102, 202, 302) of the moulding tool (100, 200, 300) and then a base material forming the moulded part is applied,
**characterised in that**
- the coating material (204, 304) is indirectly applied by means of transfer bodies (316) to the surface (103, 203, 303) of the cavity (102, 202, 302) of the moulding tool (100, 200, 300),
- a plurality of spherical transfer bodies (316) is used and
- the transfer bodies (316) are removed from the cavity (302) of the moulding tool (300) as soon as the moulding tool surface (303) is wetted as required with coating material (304).

2. A method according to claim 1, **characterised in that** the transfer bodies (316)
- are so small that they also penetrate into narrow structures of the moulding tool (300) and can wet the surface (303) of the cavity (302) of the moulding tool (300) there and
- do not fall below a predetermined mass for their removal and do not adhere too strongly to the applied surface.

3. A method according to any one of claims 1 to 2, **characterised in that** the surface of the transfer bodies (316) is smooth to rough.

4. A method according to any one of claims 1 to 3, **characterised in that** the surface of the transfer bodies (316) is absorbent and comprises capillaries for storing and delivering an increased quantity of coating material.

5. A method according to any one of claims 1 to 4, **characterised in that** the transfer bodies (316) are self-releasing.

6. A method for preparing transfer bodies (316) used in a method according to any one of the preceding claims, **characterised in that**, after the removal of the transfer bodies (316) from the cavity (302) of the moulding tool (300), once the surface wetting has taken place, the transfer bodies (316), preferably cleaned, optionally also uncleaned, again have coating material applied and are used again.

## Revendications

1. Procédé de fabrication d'une pièce moulée en matière plastique dont la face apparente est munie d'un revêtement, dans un moule (100, 200, 300) ayant une cavité (102, 202, 302), selon lequel
- on applique une matière de revêtement (204, 304) à l'état visqueux, pour former la face visible, sur la surface supérieure (103, 203, 303) de la cavité (102, 202, 302) du moule (100, 200, 300) et ensuite on applique une matière de base constituant la pièce moulée,
**caractérisé en ce que**
- la matière de revêtement (204, 304) est appliquée indirectement par des organes de transfert (316) sur la surface extérieure (103, 203, 303) de la cavité (102, 202, 302) du moule (100, 200, 300),
- on utilise un grand nombre d'organes de transfert (316) de forme sphèrique, et
- dès que la surface extérieure du moule (303) est mouillée comme cela est nécessaire par la matière de revêtement (304), on enlève les organes de transfert (316) de la cavité (302) du moule (300).

2. Procédé selon la revendication 1,
**caractérisé en ce que**
les organes de transfert (316)
- sont suffisamment petits pour pénétrer même dans des structures étroites du moule (300), et la surface supérieure (303) de la cavité (302) de l'outil de moulage (300) peut être mouillée,
- ils ne sont pas inférieur à une masse prédéfinie pour permettre de les évacuer et pour qu'ils ne s'accrochent trop fortement à la surface de revêtement appliquée.

3. Procédé selon l'une des revendications 1 et 2,
**caractérisé en ce que**
la surface supérieure du corps de transmission (316) est lisse ou rugueuse.

4. Procédé selon l'une des revendications 1 à 3,
**caractérisé en ce que**
la surface de l'organe de transfert (316) est aspirante et comporte des organes capillaires pour mémoriser et émettre une quantité importante de matériau de revêtement.

5. Procédé selon l'une des revendications 1 à 4,
**caractérisé en ce que**
les organes de transfert (316) se dissolvent automatiquement.

6. Procédé pour préparer des organes de transfert (316) utilisés dans un procédé selon l'une des revendications précédentes,
**caractérisé en ce qu'**
après l'enlèvement de l'organe de transfert (316) hors de la cavité (302) du moule (300), une fois réalisé le mouillage de la surface, l'organe de transfert (316) est de préférence nettoyé et le cas échéant également non nettoyé pour être de nouveau sollicité par une matière formant tamis et être réutilisé.
